Europäisches Patentamt

European Patent Office

Office européen des brevets

(11) Publication number: **0 227 618 B1**

# EUROPEAN PATENT SPECIFICATION

(45) Date of publication of patent specification: **28.07.93**   (51) Int. Cl.⁵: **G01N 21/35**, D06B 23/24

(21) Application number: **86850408.5**

(22) Date of filing: **26.11.86**

(54) **A moisture contents detector for a sizing machine.**

(30) Priority: **26.11.85 JP 266459/85**

(43) Date of publication of application:
**01.07.87 Bulletin 87/27**

(45) Publication of the grant of the patent:
**28.07.93 Bulletin 93/30**

(84) Designated Contracting States:
**CH DE FR IT LI**

(56) References cited:
**EP-A- 0 137 696**
**GB-A- 2 020 423**
**GB-A- 2 155 270**
**US-A- 4 171 107**

(73) Proprietor: **TSUDAKOMA KOGYO KABUSHIKI KAISHA**
**18-18, Nomachi 5-chome**
**Kanazawa-shi Ishikawa-Ken(JP)**

(72) Inventor: **Nakade, Kiyoshi**
**Ro 107, Kamimaki-machi**
**Komatsu-shi Ishikawa-ken(JP)**

(74) Representative: **Ström, Tore et al**
**Ström & Gulliksson AB Studentgatan 1 P.O. Box 4188**
**S-203 13 Malmö (SE)**

## Description

### Background of the invention

The present invention relates to a moisture contents detector for a sizing machine, and more particularly relates to an improvement in continuous detection of moisture contents in a warp sheet on a warp sizing machine.

A warp sheet is dried after sizing on a warp sizing machine and it is in general employed to continuously detect moisture contents of the warp sheet in order to determine whether or not drying is carried out in the optimum condition.

In one continuous detecting system of moisture contents, electric resistance of a warp sheet is measured. The warp sheet is nipped between a pair of electrically conductive rollers and electric current is supplied to the rollers in order to measure the electric resistance of the warp sheet. This measured resistance is used for calculating the moisture contents of the warp sheet in reference to a known resistance / moisture contents relationship. This conventional system is, however, accompanied with several fatal drawbacks. Generation of static electricity on the warp sheet greatly sways result of the detection and, in the worst case, disenables detection itself. Since the detection is based on the principle of conduction through contact, the pair of rollers must be electrically conductive. This requirement does not allow application of a non-conductive coating to the rollers which is effective to prevent undesirable sticking of size to the rollers.

As a substitute for such a resistance measuring system, use of infrared rays is recently employed in the measurement of moisture contents. This system requires no contact with the warp sheet. Infrared rays of a wavelength well absorbed by water and infrared rays of a wavelength hardly absorbed by water are alternately projected to the warp sheet and moisture contents is calculated in reference to a ratio of reflected rays. This infrared system is again accompanied with several drawbacks. When the warp density in the sheet is very small, for example when warps of 75 deniers are arranged at 1mm intervals, poor reflection of the rays tends to produce error in detection and, in the worst case, disenables detection itself. From optical requirement, the detection head has to be located at a prescribed distance from the warp sheet.

EP-A-0 137 696 discloses a method and an apparatus for measuring the moisture content of a paper web during manufacture or when subject to coating paractice. For measuring the moisture content use is made of an optical moisture detector of the reflecting type focused on the running paper web after the exit thereof from a drying section.

GB-A-2 155 270 discloses a picture scanning and recording method in which an optical sensor by means of a control system is kept focused on the surface of a picture. The control system includes light projection means and light receiving means, the optical axis of which intersect with each other on the surface of the picture. In dependence of control signals generated, a drive motor keeps the optical sensor means constantly focused on the surface of the picture.

It is also thinkable to project infrared rays to a take-up beam instead of the warp sheet. In this case, continuously increasing diameter of the take-up beam changes the distance between the beam surface and the detection head as long as the position of the detection head and the axis of the take-up beam are both fixed. This state does not suffice the above-described optical requirement.

### Summary of the invention

It is the object of the present invention to enable correct detection of moisture contents through projection of infrared rays even when a warp sheet on a warp beam of a fixed axis has a small warp density.

In accordance with the basic concept of the present invention, a detection head is arranged movable with respect to an associated take-up beam and the detection head is controlled to move in accordance with change in diameter of the take-up beam so that a constant distance should be kept between the detection head and the beam surface.

### Brief description of the drawings

Fig.1 is a perspective view of one embodiment of the moisture contents detector in accordance with the present invention,

Fig.2 is a graph for showing output characteristics of a distance sensor used for the detector shown in Fig.1,

Fig.3 is a block diagram of a control system used for the detector shown in Fig.1, and

Fig.4 is a block diagram of a control system used for another embodiment of the moisture contents detector in accordance with the present invention.

### Description of preferred embodiments

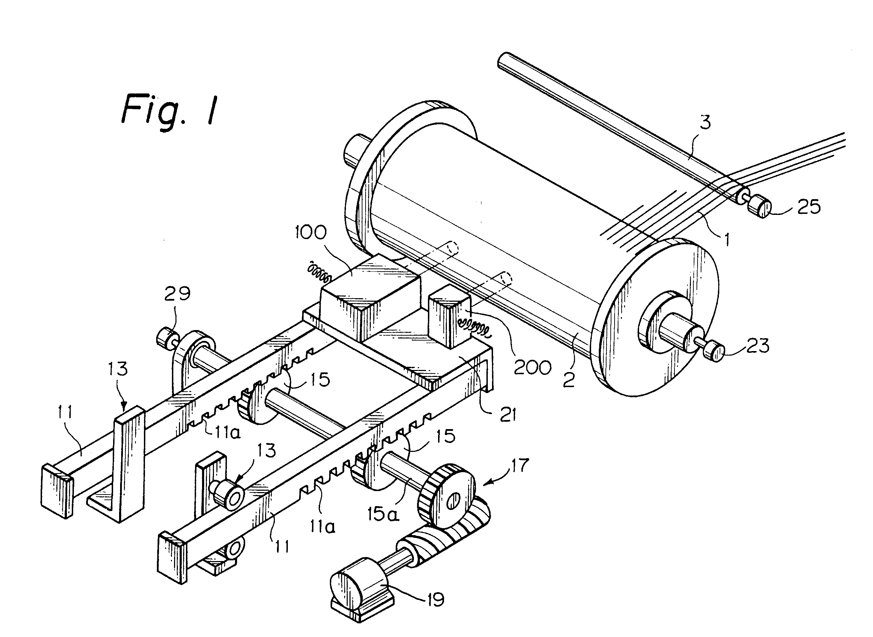

In the case of the moisture contents detector shown in Fig.1, change in beam diameter is detected through optical measurement of the distance between the detection head and the beam surface. A warp sheet 1 is taken up on a take-up beam 2 after sizing. A pair of horizontal base rails 11 extend in a direction normal to the axis of the take-up beam 2 in an arrangement movable towards and away from the take-up beam 2 under control by guide roller units 13. Each base rail 11 is provided on its bottom face with a rack 11a which is in meshing engagement with a pinion 15. The pair of pinions 15 are fixed on a horizontal pinion shaft 15a which extends in parallel to the axis of the take-up beam 2. The pinion shaft 15a is operationally coupled to a reversible motor 19 via a worm gear unit 17. As the reversible motor 19 rotates in either of the two directions, the base rails 11 move towards or away from the take-up beam 2.

A base plate 21 is fixed astriding the ends of the base rails 11 near the take-up beam 2 and, on this base plate 21, are arranged a moisture contents sensor 100 and optical distance sensor 200 facing the take-up beam 2.

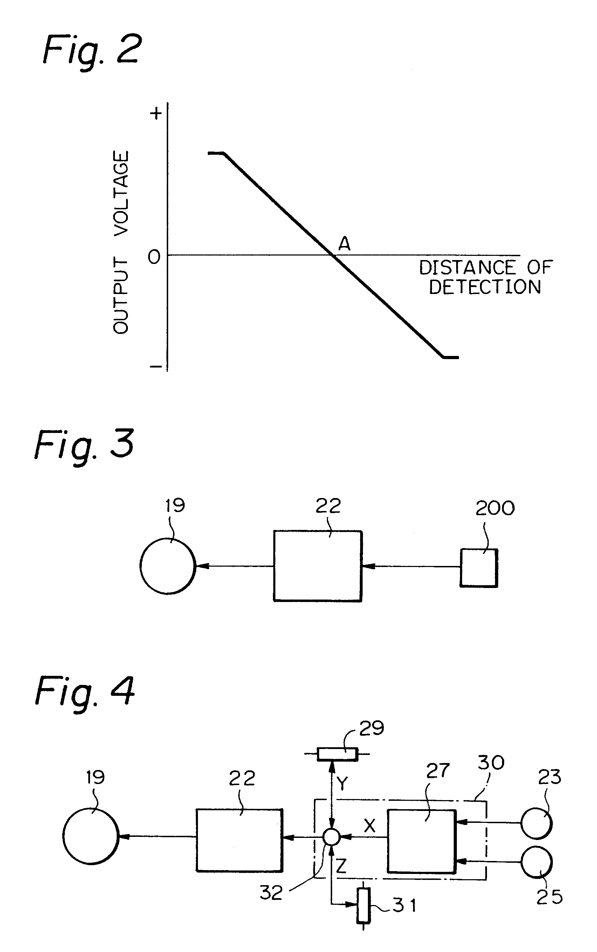

Output characteristics of the distance sensor 200 is shown in Fig.2, in which real distance between the detection head of the distance sensor 200 and the beam surface is taken on the abscissa, output voltage (analog signal) of the distance sensor 200 is taken on the ordinate and A indicates a command which is a distance to be constantly kept between the detection head of the distance sensor 200 and the beam surface. When the real distance is equal to the command A, no output voltage is generated. When the real distance is larger than the command A, negative output voltage is generated. When the real distance is smaller than the command A, positive output voltage is generated. As shown in Fig.3, the distance sensor 200 is connected to a control unit 22 for the reversible motor 19. Further, the system is arranged so that the distance between the detection head of the distance sensor 200 and the beam surface should be equal to the command A when the detection head of the moisture content sensor 100 is located at a correct position with respect to the beam surface.

As a consequence, the distance sensor 200 generates no output voltage when the detection head of the moisture contents sensor 100 is located at the correct position with respect to the beam surface. Then, the reversible motor 19 does not rotate and the moisture contents sensor 100 remains standstill.

The distance sensor 200 generates positive output voltage when the detection head of the moisture contents sensor 100 is biased towards the beam surface than the correct position corresponding to the command A. Then the reversible motor 19 rotates in one direction so that the moisture contents sensor 100 should move away from the take-up beam 2. As the detection head of the moisture contents sensor 100 returns to the correct position corresponding to the command A, the distance sensor 200 ceases generation of the positive output voltage, the reversible motor 19 ceases its rotation and the moisture contents sensor 100 stops at the correct position.

The distance sensor 200 generates negative output voltage when the detection head of the moisture contents sensor 100 is biased away from the beam surface than the correct position corresponding to the command A. Then the reversible motor 19 rotates in the other direction so that the moisture contents sensor 100 should move towards the take-up beam 2. As the detection head of the moisture contents sensor 100 returns to the correct position corresponding to the command A, the distance sensor 200 ceases generation of the negative output voltage, the reversible motor 19 ceases its rotation and the moisture contents sensor 100 stops at the correct position.

Normally the beam diameter continuously increases during taking-up of the warp sheet and, as a consequence, the real distance detected by the distance sensor 200 always has a tendency to become smaller than the command A. So, the distance sensor 200 normally generates positive output voltage, the reversible motor 19 rotates in the other direction and the base rails 11 move away from the take-up beam 2 in order to keep the detection head of the moisture contents sensor 100 at the correct position corresponding to the command A.

As a substitute for the pinion-rack combination, a fluid piston cylinder or a motor-screw combination may be used for driving the base rails 11.

The output characteristics of the distance sensor 200 is not limited to the one shown in Fig.2. Shift in polarity of output voltage at a certain command is the only requirement.

The image of the infrared ray projected by the moisture contents sensor 100 is generally circular as shown with dot lines in Fig.1. The smaller the circular image, the smaller the ill influence of the curvature of the beam surface. Too small circular image, however, results in reduced reflected ray and allows detection of moisture contents of a limited area thereby disenabling correct detection of the average moisture contents over the entire area of the beam surface. In practice, the circular image should preferably as large as possible within a range not influenced by the curvature of tile beam surface. The size of the circular image is fixed in relation to the minimum diameter of the take-up beam 2, i.e. the diameter of the beam barrel. According to a test, the practical diameter of the circular image is about 30 mm when the barrel diameter is equal to 150 mm. Use of an oval image with its longer axis extending in the axial direction of the take-up beam 2 results in a larger area of projection which allows average detection all over the beam surface.

Another embodiment of the moisture contents detector in accordance with the present invention is shown in Fig.4, in which change in beam diameter is detected by means of signal processing. Here, the mechanical construction may be the same as the one shown in Fig.1.

The distance between the axis of the take-up beam 2 and the detection ternal of the moisture contents sensor 100 is equal to (L + D/2) wherein D indicates the beam diameter and L indicates the distance between the beam surface and the detection head. In order to always keep the distance L constant, the detection head should be continuously moved away from the take-up beam 2 over a distance equal to one-half of diameter increase.

It is already known that a beam diameter can be obtained by coupling a generator 23 to the rotating shaft of the take-up beam and coupling a rotation generator 25 to the guide roller units 3 which rotate in proportion to the running speed of the warp sheet 1 and signal processing output voltages of the generators. As a substitute for the rotation generator, a pulse generator may be used too.

In the case of this embodiment, the rotation generators 23 and 25 are connected to a beam diameter calculator 27 which calculates the beam diameter D from time to time and puts out a radius signal X corresponding to one half of the calculated diameter D.

A potentiometer 29 is coupled to the pinion shaft 15a and puts out a negative distance signal Y whose absolute value increases as the base plate 21 moves away from the take-up beam 2. Further an adjustable potentio meter 31 is provided to put out a distance amendment signal Z.

The three signals X, Y and Z are added to each other at 32 and the sum signal is put in the control unit 22 which thereupon controls rotation of the reversible motor 19 according to the polarity and the absolute value of the sum signal in order to accordingly moves the detection head of the moisture contents sensor 100 towards or away from the beam surface. As the sum signal finally equals zero, the control unit 22 ceases the control on the reversible motor 19 and the moisture contents sensor 100 stops at the correct position. By means of the above-described signal processing, the sum of the three signal X, Y and Z is always rendered naught.

In practice, the distance amendment signal Z has to be properly adjusted in advance. First, the distance adjustment signal Z is set to zero. Then, the base plate 21 ceases its movement when the radius signal X equals the absolute value of the distance signal Y. Then, the distance amendment signal Z is set to a proper value by means of the potentiometer 31 and the base plate 21 moves over a distance corresponding to the set valve. So, the distance adjustment signal Z is adjusted via the patentiometer 31 when the radius signal X is at a certain value so that the distance between the detection head of the moisture contents sensor 100 on the base plate 21 and the beam surface should be set to the value corresponding to the command A.

Once adjusted, the value of the distance amendment signal Z is fixed. Thereafter, the system operates to change the distance signal Y in accordance with change in the value of the radius signal X for corresponding movement of the base plate 21. More specifically, when the radius signal X increases, the base plate 21 moves in a direction to increase the absolute value of the distance signal Y over an equal extent, i.e. in a direction away from the take-up beam 2 and the distance between the detection head of the moisture contents sensor 100 and the beam surface is kept equal to the value corresponding to the command A.

Although an adjustable distance amendment signal Z is employed in this embodiment, it is not always required to use such a signal as long as the distance between the detection head of the moisture contents sensor 100 and beam surface is equal to a certain predetermined value when the signal Z is equal to zero.

As a substitute for the potentiometer 29 for detection of the position of the base plate 21, the reversible motor 19 may be replaced by a pulse motor. The position of the base plate 21 can be known in reference to the number of pulses and rotation direction signal generated by such a pulse motor. In this case, the above-described distance signal Y is replaced by a signal indicative of accumulation of the number of pulses.

In accordance with the present invention, moisture contents can be detected without any contact with the take-up beam and any influence of the warp density of the warp sheet. So, ideal control of drying of a sized warp sheet of low warp density can be carried out successfully. Further, detection itself can be carried out very correctly since the distance between the detection head and the beam surface is always and automatically kept constant.

## Claims

1. A moisture contents detector for a warp sizing machine comprising a rotatable take-up beam for winding up sized warp **characterized** in that

   - a reflexion type optical moisture contents sensor (100) is movable by means of a drive motor towards and away from the peripheral surface of warp wound up on said take-up beam, said moisture contents sensor having a detection head directed to said peripheral surface,

- an automatic control system comprising means for determining the distance between the peripheral surface of warp taken up on said take-up beam and said moisture contents sensor, said means being connected with said drive motor for controlling the operation thereof in dependence of detected distance so as to keep constant the distance between the peripheral surface of warp taken up on said take-up beam and said moisture contents sensor.

2. A moisture contents detector as claimed in claim 1, **characterized** in that

- said moisture contents sensor (100) is mounted to a base plate (21) which by means of said drive motor is movable towards and away from said peripheral surface,
- said distance determining means of said automatic control system comprises an optical distance sensor (200) which is mounted to said base plate and has a detection head directed to said peripheral surface, and
- said base plate by means of said drive motor is driven for movement in response to an output of the distance sensor.

3. A moisture contents detector as claimed in claim 1, **characterized** in that

- said moisture contents sensor (100) is mounted to a base plate (21) which by means of said drive motor is movable towards and away from said peripheral surface,
- said distance determining means of said automatic control system comprises a processor (30) which calculates the sum of a signal (X) relating to the diameter of the take-up beam and a signal (Y) relating to the amount of movment of the base plate (21), and that the base plate is driven for movement in response to the output of the processor.

4. A moisture contents detector as claimed in any of claims 1 - 3 **characterized** in that the image of projection of infrared ray generated by the moisture contents sensor on said surface is oval in shape, the longer axis of which extends in the longitudinal direction of the take-up beam.

**Patentansprüche**

1. Feuchtegradmesser für eine Kettenschlichtmaschine mit einem drehbaren Abzugs- oder Aufwickelbaum zum Aufwickeln der geschlichteten Kette, dadurch **gekennzeichnet**, daß

- ein optischer Reflexionstyp-Feuchtegradmesser (100) mittels eines Antriebsmotors auf die Umfangsfläche der auf den Abzugs- oder Aufwickelbaum aufgewickelten Kette zu und von ihr hinweg bewegbar ist, wobei der Feuchtegradmesser einen der Umfangsfläche zugewandten Detektions- oder Meßkopf aufweist,
- ein automatisches Steuersystem eine Einrichtung zum Bestimmen des Abstands zwischen der Umfangsfläche der auf den Abzugs- oder Aufwickelbaum aufgewickelten Kette und dem Feuchtegradmesser aufweist, wobei diese Einrichtung mit dem Antriebsmotor zur Steuerung seines Betriebs in Abhängigkeit vom erfaßten Abstand verbunden ist, um den Abstand zwischen der Umfangsfläche der auf den Abzugs- oder Aufwickelbaum aufgewickelten Kette und dem Feuchtegradmesser konstant zu halten.

2. Feuchtegradmesser nach Anspruch 1, dadurch gekennzeichnet, daß

- der Feuchtegradmesser (100) an einer Grundplatte (21) montiert ist, die mittels des Antriebsmotors auf die genannte Umfangsfläche zu und von ihr hinweg bewegbar ist,
- die Abstandsbestimmungseinrichtung des automatischen Steuersystems einen optischen Abstandssensor (200) aufweist, der an der Grundplatte montiert ist und einen zur Umfangsfläche gerichteten Detektions- oder Meßkopf aufweist, und
- die Grundplatte mittels des Antriebsmotors in Abhängigkeit von einem Ausgangssignal vom Abstandssensor für Bewegung angetrieben wird.

3. Feuchtegradmesser nach Anspruch 1, dadurch gekennzeichnet, daß

- der Feuchtegradmesser (100) an einer Grundplatte (21) montiert ist, die mittels des Antriebsmotors auf die genannte Umfangsfläche zu und von ihr hinweg bewegbar ist,
- die Abstandsbestimmungseinrichtung des automatischen Steuersystems einen Prozessor (30) aufweist, der die Summe aus einem Signal (X) bezüglich des Durchmessers des Abzugs- oder Aufwikkelbaums und einem Signal (Y) bezüglich der Größe der Bewegung der Grundplatte (21) berechnet, und daß die Grundplatte in Abhängigkeit vom Ausgangssignal vom Prozessor für Bewegung angetrieben wird.

4. Feuchtegradmesser nach einem der Ansprüche 1 bis 3, dadurch gekennzeichnet, daß das durch den Feuchtegradmesser auf der genannten (Umfangs-)Fläche erzeugte Infrarotstrahl-Projektionsbild eine ovale Form aufweist, deren längere Achse in der Längsrichtung des Abzugs- oder Aufwickelbaums verläuft.

**Revendications**

1. Détecteur d'humidité pour encolleuse pour chaînes comprenant une ensouple d'enroulement rotative pour enrouler la chaîne encollée, caractérisé en ce que :
   - un capteur d'humidité optique du type à réflexion (100) est déplacé par un moteur d'entraînement pour se rapprocher de la surface périphérique de ladite ensouple d'enroulement et s'en éloigner, ledit capteur d'humidité ayant une tête de détection dirigée vers ladite surface périphérique,
   - un système de commande automatique comprenant un moyen pour déterminer la distance entre la surface périphérique de la chaîne enroulée sur ladite ensouple d'enroulement et ledit capteur d'humidité, ledit moyen étant connecté audit moteur d'entraînement pour commander son fonctionnement en fonction de la distance détectée de manière à maintenir constante la distance entre la surface périphérique de la chaîne enroulée sur ladite ensouple d'enroulement et ledit capteur d'humidité.

2. Détecteur d'humidité selon la revendication 1, caractérisé en ce que :
   - ledit capteur d'humidité du type à réflexion (100) est monté sur une plaque de base (21) qui, au moyen dudit moteur d'entraînement, est déplacé pour se rapprocher de ladite surface périphérique et s'en éloigner,
   - ledit moyen de détermination de distance dudit système de commande automatique comprend un capteur de distance optique (200) qui est monté sur ladite plaque de base et comporte une tête de détection dirigée vers ladite surface périphérique, et
   - ladite plaque de base, au moyen dudit moteur, est entraînée pour se déplacer en réponse à une sortie du capteur de distance.

3. Détecteur d'humidité selon la revendication 1, caractérisé en ce que :
   - ledit capteur d'humidité (100) est monté sur une plaque de base (21) qui, au moyen dudit moteur d'entraînement, peut être déplacée pour se rapprocher de ladite surface périphérique et s'en éloigner,
   - ledit moyen de détermination de distance dudit système de commande automatique comprend un processeur (30) qui calcule la somme d'un signal (X) concernant le diamètre de l'ensouple d'enroulement et un signal (Y) relatif à la valeur du déplacement de la plaque de base (21), et en ce que la plaque de base est entraînée pour se déplacer en réponse à la sortie du processeur.

4. Détecteur d'humidité selon l'une quelconque des revendications 1 à 3, caractérisé en ce que l'image de la projection du rayon infrarouge généré par le capteur d'humidité sur ladite surface a une forme ovale, dont le grand axe s'étend dans la direction longitudinale de l'ensouple d'enroulement.

Fig. I

*Fig. 2*

*Fig. 3*

*Fig. 4*